**Europäisches Patentamt**

**European Patent Office** ·

**Office européen des brevets**

(19)

(11) Veröffentlichungsnummer: **0 114 979 B1**

(12) # EUROPÄISCHE PATENTSCHRIFT

(45) Veröffentlichungstag der Patentschrift:
**07.01.87**

(51) Int. Cl.⁴: **B 65 G 39/02, F 16 C 13/00**

(21) Anmeldenummer: **83112053.0**

(22) Anmeldetag: **01.12.83**

(54) **Fördereinrichtung für Leiterplatten.**

(30) Priorität: **27.01.83 CH 451/83**

(43) Veröffentlichungstag der Anmeldung:
**08.08.84 Patentblatt 84/32**

(45) Bekanntmachung des Hinweises auf die Patenterteilung:
**07.01.87 Patentblatt 87/2**

(84) Benannte Vertragsstaaten:
**AT BE CH DE FR GB IT LI NL SE**

(56) Entgegenhaltungen:
**FR - A - 1 012 864**
**FR - A - 1 348 379**
**GB - A - 853 449**

(73) Patentinhaber: **SIEMENS-ALBIS AKTIENGESELLSCHAFT, EGA1/Verträge und Patente Postfach, CH-8047 Zürich (CH)**

(84) Benannte Vertragsstaaten: **CH LI**

(73) Patentinhaber: **Siemens Aktiengesellschaft Berlin und München, Wittelsbacherplatz 2, D-8000 München 2 (DE)**

(84) Benannte Vertragsstaaten: **BE DE FR GB IT NL SE AT**

(72) Erfinder: **Schatzmann, Kurt, Hätschenstrasse 12, CH-8953 Dietikon (CH)**

## Beschreibung

Die vorliegende Erfindung betrifft eine Fördereinrichtung gemäss dem Oberbegriff des Patentanspruches 1 (bekannt aus der Druckschrift «Ministem + Combistem», veröffentlicht im Frühjahr 1975).

In automatischen Fertigungsstrassen durchläuft das hergestellte Produkt während des Fertigungsablaufs verschiedene Stationen und wird dabei selbsttätig mittels einer Fördereinrichtung jeweils von einer Station zur nächsten transportiert. Dabei müssen die Fördereinrichtungen je nach Art ihres Einsatzes unterschiedlichsten Anforderungen genügen.

Dies ist auch bei einer Fördereinrichtung in einer automatisierten Fertigungsstrasse für vorverzinnte Leiterplatten mit horizontalem Durchlauf der Leiterplatten der Fall. Die als gedruckte Schaltungen ausgelegten und zur Aufnahme von elektrischen Bauelementen vorgesehenen Leiterplatten werden oft vor der eigentlichen Bestückung mit den Bauelementen vorverzinnt; d.h. es wird eine schützende lötbare Beschichtung auf die Platten aufgebracht, um dadurch deren Löt- und Lagerhaltungseigenschaften zu verbessern. Hierzu werden die Leiterplatten zunächst mit einem Flussmittel beaufschlagt, hierauf vorgewärmt und anschliessend ein- oder beidseitig mit dem flüssigen Lot in Verbindung gebracht. Die Platten durchlaufen dabei in horizontaler Lage nacheinander eine Fluxstation, eine Vorwärmstation, eine Verzinnstation und nachfolgende Nachbehandlungsstationen. Für den horizontalen Transport der Leiterplatten kann eine durch die einzelnen Stationen hindurchführende Fördereinrichtung vorgesehen werden, die beispielsweise aus angetriebenen und in der Förderebene angeordneten Transportrollen besteht. Dabei müssen die Transportelemente insbesondere in der Vorwärmstation unterschiedlichsten Anforderungen gerecht werden. So ist dort vor allem erwünscht, dass die von oben und/oder von unten gegen die Leiterplattenoberfläche gerichtete Wärmestrahlung möglichst ungehindert einwirken kann und nicht von einem durch die Transportelemente hervorgerufenen Strahlungsschatten beeinträchtigt wird. Da die üblichen Flussmittel mehr oder weniger aggressive Säuren enthalten oder beim Erhitzen Säuren abspalten, müssen die Transportelemente auch säurebeständig sein. Ferner bestehen extrem hohe Anforderungen hinsichtlich ihrer Wärmebeständigkeit. Die heute üblicherweise mit Kunststoffteilen bestückten Transportelemente vermögen diesen harten Anforderungen nicht zu genügen und neigen insbesondere zu relativ rascher Alterung.

In der GB-A-853 449 ist ein Transporteinrichtung mit Förderelementen für blattförmige Gegenstände beschrieben, deren Oberfläche während des Transports nicht zerkratzt werden darf. Die Elemente bestehen aus einem zylindrischen Kern, auf dem spiralförmig eine Bürste aufgebracht ist. Diese besteht aus einem Träger, der über seine ganze Länge einen Einschnitt aufweist, in dem Borsten eingelassen und festgehalten sind, über deren freie Enden die Gegenstände hinweggleiten. Die Herstellung solcher Förderelemente ist aufwendig und daher kostspielig.

Aus der FR-A-1 348 379 ist ein Transportrolle bekannt, die einen Kern aufweist, auf dem in einem Abstand eine Art Spirale aufgebracht ist. Der Abstand wird durch regelmässig auf dem verteilte Stützelemente erreicht. Auch eine solche Transportrolle ist relativ aufwendig, da vor dem Aufbringen der Spirale jeweils die notwendigen Stützelemente am Kern angebracht werden müssen.

In einem im Frühjahr 1975 erschienenen Prospekt «Ministem + Combistem» der Firma Höllmüller D-7033 Herrenberg ist eine Fertigungsanlage für Leiterplatten beschrieben, in der die Leiterplatten über horizontal angeordnete Transportelemente fortbewegt werden. Nebst walzenförmigen Transportelementen sind darin auch Elemente gezeigt, die aus einem stabförmigen Kern bestehen, auf dem entweder in einem Abstand voneinander angeordnete kreisförmige Scheiben oder eine Wendel aufgebracht sind. Dabei läuft die Leiterplatte über die Hüllkurve der Scheiben bzw. der Wendel. Die Herstellung solcher Transportelemente ist relativ aufwendig.

Davon ausgehend ist es Aufgabe der vorliegenden Erfindung, eine Fördereinrichtung der eingangs erwähnten Art mit Transportelementen zu schaffen, die den genannten Anforderungen genügen und einfach herstellbar sind. Die Lösung dieser Aufgabe gelingt mit den im Kennzeichen des Anspruches 1 angegebenen Massnahmen. Vorteilhafte Weiterbildungen sind in weiteren Ansprüchen angegeben.

Neben der Erfüllung der erwähnten speziellen Anforderungen ist ein wesentlicher Vorteil der Erfindung darin zu sehen, dass die vorgeschlagenen Transportelemente sehr einfach und ohne Verwendung besonderer Hilfsmittel hergestellt werden können und daher eine kostengünstige Lösung bieten. Weitere Vorteile sind aus der anschliessenden Beschreibung eines Ausführungsbeispieles ersichtlich.

Ein ähnlich wie das in der erfindungsgemässen Fördereinrichtung eingesetzte Transportelement ausgebildetes Gerät ist aus der US-PS 623 285 bekannt. Dieses Gerät entstammt jedoch einem völlig anderen Anwendungsgebiet. Es dient nämlich in der Hutfabrikation dazu, dem Bund eines Hutes eine bestimmte Grösse zu verleihen und ist nicht zum Transport von irgendwelchen Gegenständen vorgesehen.

Die US-PS 3 791 731 beschreibt ein Transportelement zum Transportieren von Papierblättern in einer Kopiermaschine, das annähernd gleich aufgebaut ist, wie das Transportelement der vorliegenden Fördereinrichtung. Abgesehen davon, dass auch dieses Transportelement einem anderen Anwendungsgebiet entstammt, bestammt, besteht in diesem Fall die Forderung nach einem möglichst geringen Wärmestrahlungsschatten nicht.

Nachstehend wird anhand einer Zeichnung ein in der erfindungsgemässen Fördereinrichtung eingesetztes Transportelement beispielsweise näher beschrieben.

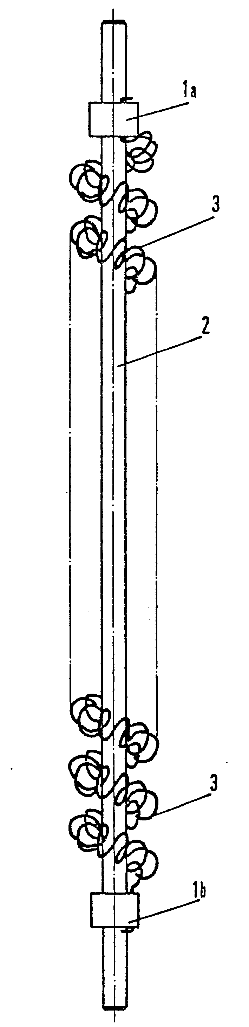

Das Transportelement besteht aus einem stabförmigen Kern 2, an dessen beiden Enden nicht weiter dargestellte Mittel zum Einsetzen in eine Fördereinrichtung angebracht werden können. Auf dem Kern 2 ist spiralförmig ein Draht 3 aufgebracht, der seinerseits schraubenlinienförmig geformt ist. Dazu eignet sich insbesondere ein bereits als Schraubenfeder vorgeformter Draht aus Federstahl, wie er für Druckfedern im Handel erhältlich ist. Dabei wird zunächst das eine Ende auf dem Kern 2 an einem auf diesem angebrachten Halter 1a fixiert und hierauf der Draht kontinuierlich auf dem Kern 2 aufgewickelt und das andere Ende an einem weiteren Halter 1b befestigt. In der Zeichnung ist der aufgewickelte Draht 3 der Einfachheit halber nur im Bereich der Enden des Kerns 2 im Einzelnen dargestellt, im mittleren Bereich ist lediglich der Verlauf der Hüllkurve des Drahtes 3 angedeutet. Als Halter 1 können Stellringe eingesetzt werden. Durch entsprechende Wahl des Durchmessers des Druckfederstranges lässt sich in einfacher Weise der gewünschte Durchmesser des Transportelementes festlegen. Ebenso kann die notwendige Tragkraft durch geeignete Wahl des Drahtdurchmessers erreicht werden. Die Transportbreite wird durch den Abstand der Halter 1a, 1b bestimmt.

Derartig ausgebildete Transportelemente lassen sich u.a. in einer Fördereinrichtung einer Leiterplattenfertigungsstrasse vorteilhaft einsetzen. Hierzu werden mehrere Transportelemente parallel zueinander in der Förderebene angeordnet und wenigstens ein Teil davon in gleicher Richtung angetrieben. Dadurch liegen die beförderten Leiterplatten entsprechend der Hüllkurve der Transportelemente nur punktuell auf diesen auf, wodurch sich eine grosse Anzahl von unregelmässig verteilten Berührungspunkten auf der durchlaufenden Leiterplatte ergibt. Daraus resultiert insbesondere im Bereich der Vorwärmstation, wo die mit dem Flussmittel benetzten Leiterplatten eintreffen, der Vorteil, dass die Flussmittelschicht praktisch nicht beeinträchtigt wird. Überdies wird die in der Vorwärmstation beispielsweise von unten und/oder von oben auf die Leiterplatte einwirkende Wärmestrahlung durch die Transportelemente nur unwesentlich beeinflusst, da der «Strahlungsschatten» bei dieser Art von Transportelementen sehr klein ist. Die Wärmekapazität der Transportelemente ist nur gering. Im weiteren bietet die erfindungsgemässe Ausgestaltung der Transportelemente den Vorteil, dass beim Auflaufen einer an ihrer Frontseite nicht ganz ebenen Leiterplatte auf ein Transportelement diese jeweils selbsttätig wieder in die Förderebene gelangt. Alle diese Vorteile gelten uneingeschränkt auch für den Fall, wo die Transportelemente paarweise, d.h. je ein Element über und unter der Transportebene, angeordnet sind und die Leiterplatten zwischen den beiden Transportelementen eines Paares hindurchgeschoben werden. Die in einer solchen Fertigungsstrasse besonderen Anforderungen bezüglich Wärme- und Säurebeständigkeit lassen sich durch Wahl von entsprechende Eigenschaften aufweisenden Materialien (z.B. rostfreier Stahl bzw. Federstahl) erfüllen. Die Zahl der Auflagepunkte der Leiterplatte auf den Transportelementen lässt sich dadurch beeinflussen, dass der Draht 3 mehr oder weniger eng auf den Kern 2 aufgewickelt wird.

## Patentansprüche

1. Fördereinrichtung zum Transportieren von Leiterplatten in einer Leiterplattenfertigungsstrasse mit horizontalem Durchlauf der Leiterplatten, wobei diese über mehrere parallel in der Transportebene nebeneinander angeordnete zylinderförmige Transportelemente (10), von deren wenigstens ein Teil angetrieben ist, hinweggleiten, dadurch gekennzeichnet, dass wenigstens im Bereich der Vorwärmstation, wo das vorher auf die Leiterplatten aufgebrachte Flussmittel durch Wärmestrahlung aktiviert wird, Transportelemente (10) vorgesehen sind, die einen Kern (2) aufweisen, auf dem über wenigstens einen Teil seiner Länge spiralförmig ein seinerseits schraubenlinienförmig geformter Draht (3) aufgewickelt ist.

2. Fördereinrichtung nach Anspruch 1, dadurch gekennzeichnet, dass die Transportelemente (10) jeweils paarweise so übereinander angeordnet sind, dass sich die beiden Transportelemente in der Fortbewegungsebene berühren, und dass das obere Transportelement vertikal verschiebbar angeordnet ist.

3. Fördereinrichtung nach Anspruch 1 oder 2, dadurch gekennzeichnet, dass der auf dem Kern (2) aufgewickelte Draht (3) aus Federstahl besteht.

4. Fördereinrichtung nach Anspruch 3, dadurch gekennzeichnet, dass ein Druckfederstrang auf dem Kern (2) aufgewickelt ist.

## Claims

1. A conveyor device for transporting circuit boards in a circuit board production line along which the circuit boards pass horizontally, where the circuit boards slide along aver a plurality of cylindrical transport elements (10) which are arranged in parallel side-by-side in the plane of transport and at least some of which are driven, characterised in that, at least in the region of the pre-heating station, where the flux previously applied to the circuit boards is activated by heat radiation, transport elements (10) are arranged which have a core (2) onto which over at least a part of its length, a wire (3) of helical form is wound in helical manner.

2. A conveyor device as claimed in claim 1, characterised in that the transport elements (10) are arranged one above another in pairs in such manner that the two transport elements contact one another in the plane of travel; and that the upper transport element is arranged to be vertically displaceable.

3. A conveyor device as claimed in claim 1 or claim 2, characterised in that the wire (3) which is wound onto the core (2) is made of spring steel.

4. A conveyor device as claimed in claim 3, characterised in that a length of compression spring is wound onto the core (2).

## Revendications

1. Dispositif de transport pour le transport de plaquettes à circuits imprimés dans une ligne de fabrication de plaquettes à circuits imprimés, dans laquelle ces dernières se déplacent suivant un trajet horizontal et glissent sur plusieurs éléments cylindriques de transport (10), disposés côte-à-côte et en parallèle dans le plan de transport et dont au moins une partie est entraînée, caractérisé par le fait qu'il est prévu au moins dans la zone du poste de préchauffage, où le flux déposé préalablement sur les plaquettes à circuits imprimés est activé par un rayonnement thermique, des éléments de transport (10), qui comportent un noyeau (2), sur au moins une partie de la longueur duquel se trouve enroulé sous forme hélicoïdale un fil (3) qui possède pour sa part une forme hélicoïdale.

2. Dispositif de transport suivant la revendication 1, caractérisé par le fait que les éléments de transport (10) sont superposés respectivement par couples, de telle sorte que les deux éléments de transport se touchent dans le plan d'entraînement et que l'élément de transport supérieur est disposé de manière à être déplaçable verticalement.

3. Dispositif de transport suivant la revendication 1 ou 2, caractérisé par le fait que le fil (3) enroulé sur le noyeau (2) est constitué par un acier à ressorts.

4. Dispositif de transport suivant la revendication 3, caractérisé par le fait qu'un cordon formant ressort de compression est enroulé sur le noyeau (2).

0 114 979

5